# EUROPÄISCHE PATENTSCHRIFT

(11) **EP 1 061 289 B1**
(45) Veröffentlichungstag und Bekanntmachung des Hinweises auf die Patenterteilung: **16.08.2006**
(21) Anmeldenummer: 00112330.6
(22) Anmeldetag: 09.06.2000
(51) Int. Cl.: F16H 48/22

(54) **Betätigungseinrichtung für eine Sperre, vorzugsweise eine Reibschlusssperre, eines Differentialgetriebes**
Actuator for a lock, preferably a frictional lock, of a differential
Dispositif d'actionnement pour un blocage, de préférence un blocage à friction, de différentiel

(30) Priorität: 15.06.1999 DE 19927079
(43) Veröffentlichungstag der Anmeldung: 20.12.2000
(73) Patentinhaber: HYDRAULIK-RING GMBH, 97828 Marktheidenfeld (DE)
(72) Erfinder: Wild, Andreas, 72669 Unterensingn (DE); Meyer, Roland, 91154 Roth (DE)

(56) Entgegenhaltungen:
- DE-A- 4 343 307
- DE-C- 4 424 202
- US-A- 5 310 388
- US-A- 5 536 215

## Beschreibung

Die Erfindung betrifft eine Betätigungseinrichtung für eine Sperre, vorzugsweise eine Reibschlußsperre, eines Differentialgetriebes nach dem Oberbegriff des Anspruches 1.

Es ist ein Differentialgetriebe bekannt, bei dem eine über eine Differenzdrehzahl zwischen Radachse und dem Differentialgehäuse angetriebene Rotorpumpe Öl in ein Kolbengehäuse fördert, in dem ein Kolben axial verschiebbar gelagert ist. Er drückt bei Druckaufbau durch die Pumpe auf ein Lamellenpaket, welches durch Reibschluß die Übertragung des Antriebsmomentes auf die Räder bewirkt. Für eine differenzdrehzahlabhängige Momentübertragung sorgt eine im Kolben eingebaute Düse mit konstantem Blendenquerschnitt, welche das Öl gezielt in den Lamellenraum abströmen läßt und damit den Druckaufbau hinter dem Kolben vom geförderten Ölvolumen abhängig macht. Durch den konstanten Blendenquerschnitt ist nur in einem schmalen Temperaturbereich eine einwandfreie Funktion der Lamellensperre gewährleistet, da sich die Viskosität des Öls mit der Temperatur stark ändert.

Aus der US 5 310 388 und der gattungsgemäßen US 5 536 215 ist eine temperaturabhängige Druckregelung für eine Kupplung, deren Regelelement ein Bimetall ist, entnehmbar. Die Durchflussöffnung ist parallel mit einer Minimalöffnung angeordnet, damit ein permanenter Fluss der Hydraulikflüssigkeit gegeben ist. Ein anderes Prinzip ist aus den beiden Druckschriften DE 43 43 307 A1 und DE 44 24 202 C1 bekannt, in denen ein temperaturabhängiges Drosselverfahren zum Temperaturausgleich des Temperaturverhaltens der viskosen Flüssigkeit über einen Beipass vorgestellt wird.

Der Erfindung liegt die Aufgabe zugrunde, die gattungsgemäße Betätigungseinrichtung so auszubilden, daß die Sperre in einem großen Temperaturbereich einwandfrei arbeitet.

Diese Aufgabe wird bei der gattungsgemäßen Betätigungseinrichtung erfindungsgemäß mit den kennzeichnenden Merkmalen des Anspruches 1 gelöst.

Bei der erfindungsgemäßen Betätigungseinrichtung sorgt die temperaturabhängige Drossel dafür, daß der Blendenquerschnitt in Abhängigkeit von der Temperatur des Druckmediums verändert wird. Nimmt die Temperatur des Druckmediums zu, wird seine Viskosität erhöht und damit dünnflüssiger. In diesem Falle wird durch die temperaturabhängige Drossel der Blendenquerschnitt verringert. Bei geringeren Temperaturen und damit geringerer Viskosität des Druckmediums wird der Blendenquerschnitt durch die temperaturabhängige Drossel vergrößert, so daß auch bei geringeren Temperaturen ein ausreichender Volumenstrom des Druckmediums gewährleistet ist. Die Drossel bildet ein temperaturkompensiertes Ventil, um die Temperaturabhängigkeit der Viskosität des Druckmediums auszugleichen.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen:
- Fig. 1: einen Hydraulikplan einer erfindungsgemäßen Betätigungseinrichtung,
- Fig. 2: ein Druck-Drehzahl-Diagramm der erfindungsgemäßen Betätigungseinrichtung,
- Fig. 3: im Axialschnitt und in schematischer Darstellung eine Hälfte einer Differentialsperre eines Differentialgetriebes,
- Fig. 4: einen Schnitt längs der Linie IV - IV in Fig. 5 einen Teil einer ersten Ausführungsform einer erfindungsgemäßen Betätigungseinrichtung,
- Fig. 5: einen Axialschnitt durch einen Teil der Betätigungseinrichtung gemäß Fig. 4,
- Fig. 6: eine Ansicht in Richtung des Pfeiles VI in Fig. 5,
- Fig. 7: einen Schnitt längs der Linie VII - VII in Fig. 4,
- Fig. 8: eine Ansicht eines Kolbengehäuses einer erfindungsgemäßen Betätigungseinrichtung,
- Fig. 9: in einer Darstellung entsprechend Fig. 5 die zweite Ausführungsform der erfindungsgemäßen Betätigungseinrichtung,
- Fig. 10: einen Schnitt längs der Linie X - X in Fig. 9,
- Fig. 11: einen Schnitt längs der Linie XI - XI in Fig. 10,
- Fig. 12: in schematischer Darstellung ein Differentialgetriebe mit einer erfindungsgemäßen Betätigungseinrichtung,
- Fig. 13: im Halbschnitt ein Drosselelement der erfindungsgemäßen Betätigungseinrichtung,
- Fig. 14: in Seiten- und in Stirnansicht eine weitere Ausführungsform eines Drosselelementes,
- Fig. 15: das Drosselelement gemäß Fig. 13 in Seitenansicht und in vergrößerter Darstellung,
- Fig. 16: in schematischer Darstellung und in Ansicht das Innen-und das Außenrad einer Rotorpumpe der erfindungsgemäßen Betätigungseinrichtung,
- Fig. 17: in explosiver Darstellung die erfindungsgemäße Betätigungseinrichtung,
- Fig. 18: ein Druck-Durchflußmengen-Diagramm eines Druckbegrenzungsventils der erfindungsgemäßen Betätigungseinrichtung,
- Fig. 19: ein Druck-Durchflußmengen-Diagramm des Gesamtsystems,
- Fig. 20: das Druck-Weg-Diagramm eines Pulsationsdämpfers der erfindungsgemäßen Betätigungseinrichtung.

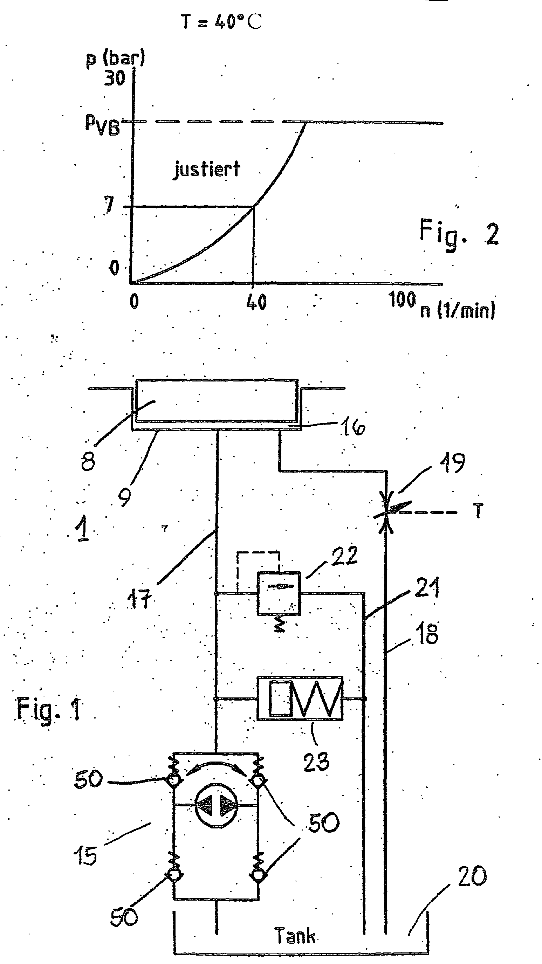

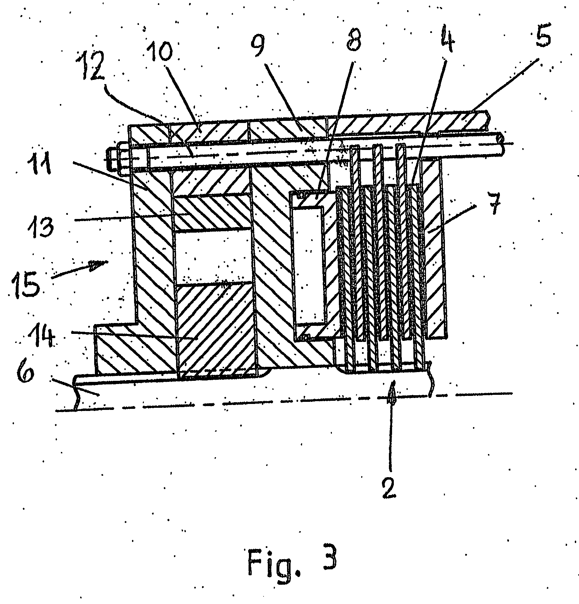

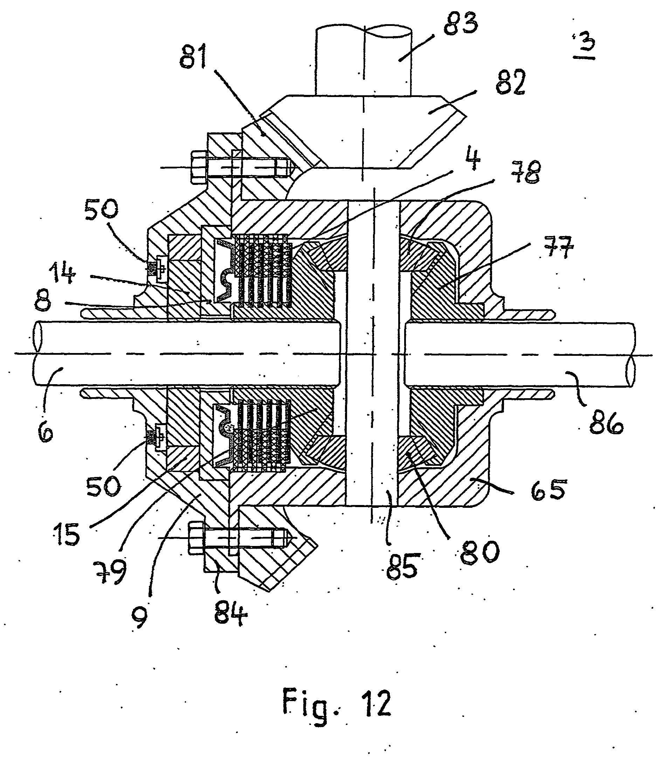

Fig. 1 zeigt einen Hydraulikplan einer Betätigungseinrichtung 1 für eine Lamellensperre 2 (Fig. 3) eines Differentialgetriebes 3 (Fig. 12) eines Fahrzeuges. Die Lamellensperre 2 wird durch ein Lamellenpaket gebildet, das ineinandergreifende Kupplungslamellen 4 aufweist, die in einem Lamellengehäuse 5 untergebracht sind. Jeweils übernächste Kupplungslamellen 4 sitzen drehfest auf einer Radachse 6, während die jeweils dazwischen befindlichen Kupplungslamellen 4 gehäusefest angeordnet sind. Auf den Kupplungslamellen 4 befinden sich in bekannter Weise Reibbeläge. Das Lamellenpaket liegt zwischen einem Getrieberad 7 und einem Kolben 8, der mit Hydraulikmedium zum Zusammendrücken des Lamellenpaketes beaufschlagt werden kann. Der Kolben 8 ist in einem Kolbengehäuse 9 untergebracht, das zwischen dem Lamellengehäuse 5 und einem Distanzring 10 liegt, der ein Pumpengehäuse bildet, das durch einen Pumpendeckel 11 geschlossen ist. Der Pumpendeckel 11, der Distanzring 10, das Kolbengehäuse 9 und das Lamellengehäuse 5 sind durch sie durchsetzende Bolzen 12 zusammengehalten. Der Distanzring 10 umgibt einen Außenring 13 und einen Innenring 14 einer Rotorpumpe 15. Der Innenring 14 sitzt drehfest auf der Radachse 6, die durch den Pumpendeckel 11 nach außen ragt. Der Distanzring 10, das Kolbengehäuse 9 und das Lamellengehäuse 5 umgeben die Radachse 6.

Durch Druckbeaufschlagung des Kolbens 9 werden die Kupplungslamellen 4 zusammengedrückt, wodurch in noch zu beschreibender Weise das Differentialgetriebe gesperrt wird.

Der Kolben 8 wird, wie sich aus Fig. 1 ergibt, einseitig mit Hydraulikmedium beaufschlagt. In den den Kolben 8 aufnehmenden Druckraum 16 des Kolbengehäuses 9 mündet eine Druckleitung 17, an welche die Rotorpumpe 15 angeschlossen ist. In den Druckraum 16 mündet außerdem eine Tankleitung 18, in der sich eine temperaturabhängige Drossel 19 befindet und über die das Hydraulikmedium in einen Tank 20 zurückgeführt werden kann.

In einer Zweigleitung 21 der Druckleitung 17 liegt ein Druckbegrenzungsventil 22, das zur Drehmomentbegrenzung bzw. zum Schutz des Getriebes vor Überlastung bzw. Beschädigung bei Überschreiten eines vorgegebenen Druckes in der Druckleitung 17 öffnet, so daß das Hydraulikmedium über das Druckbegrenzungsventil 22 und die Zweigleitung 21 zum Tank 20 zurückgeführt werden kann. Zwischen die Druckleitung 17 und die Zweigleitung 21 ist ein Pulsationsdämpfer 23 eingebaut. Er liegt in Strömungsrichtung vom Tank 20 zum Kolben 8 vor dem Druckbegrenzungsventil. Der Pulsationsdämpfer 23 sorgt dafür, daß die beim Betrieb der Rotorpumpe 17 auftretenden Druckpulsationen so aufgefangen werden, daß die Funktion der Einrichtung nicht beeinträchtigt wird.

Die Druckleitung 17 und die Rotorpumpe 15 sind durch Rückschlagventile 50 gegen den Tank 20 abgesichert.

Fig. 2 zeigt den Kennlinienverlauf der Betätigungseinrichtung 1 gemäß Fig. 1 bei einer Temperatur von 40°C. Dargestellt ist die Kennlinie der Drossel 19. Mit steigender Drehzahl der Rotorpumpe 15 steigt der Hydraulikdruck, bis bei einer vorgegebenen Drehzahl der Grenzdruck p_{VB} erreicht ist. Mit zunehmender Drehzahl der Rotorpumpe 15 bleibt der Druck auf diesem Grenzdruck p_{VB}.

Die Drossel 19, das Druckbegrenzungsventil 22 und der Pulsationsdämpfer 23 sind vorteilhaft im Kolbengehäuse 9 (Fig. 3) untergebracht. Aus Gründen der Übersichtlichkeit sind diese Elemente in Fig. 3 nicht dargestellt.

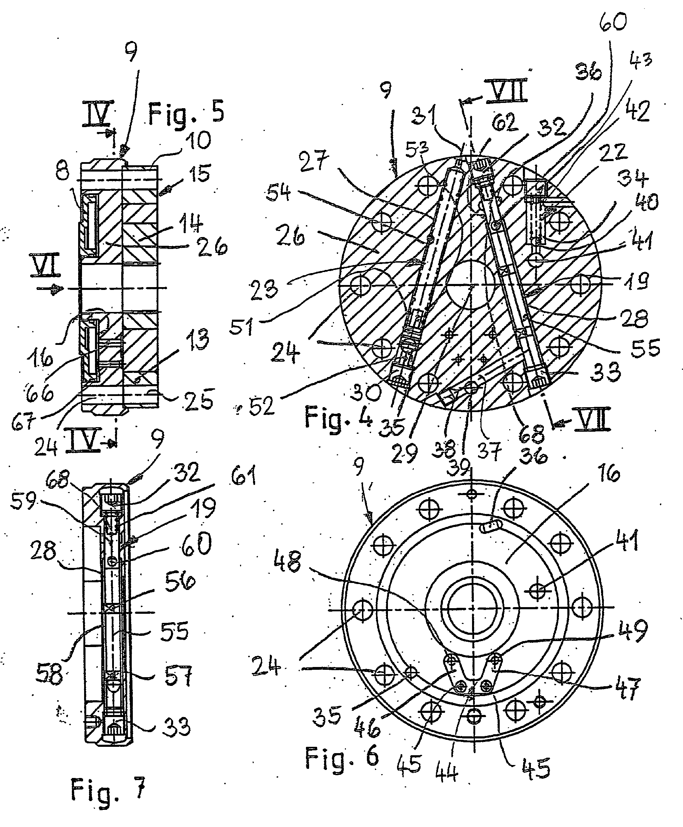

Die Fig. 4 bis 7 zeigen ein erstes Ausführungsbeispiel der Betätigungseinrichtung 1. Das Kolbengehäuse 9 hat kreisförmigen Umriß und weist an einer Stirnseite den Druckraum 16 auf, der als Ringraum ausgebildet ist und den als Ringkolben ausgebildeten Kolben 8 aufnimmt. Er liegt koaxial zum Kolbengehäuse 9 und ist als Hohlkolben (Fig. 5) ausgebildet. An das Kolbengehäuse 9 ist auf der vom Kolben 8 abgewandten Seite die Rotorpumpe 15 angeschlossen. Das Kolbengehäuse 9 und das Pumpengehäuse 10 weisen über den Umfang vorteilhaft gleichmäßig verteilt angeordnete Bohrungen 24, 25 für die Bolzen 12 (Fig. 3) auf.

Das Kolbengehäuse 9 hat einen Boden 26, in dem zwei winklig zueinander liegende Bohrungen 27, 28 untergebracht sind. Die Bohrung 27 nimmt den Pulsationsdämpfer 23 und die Bohrung 28 die Drossel 19 auf. Beide Bohrungen 27, 28 liegen senkrecht zur Achse 29 des Kolbengehäuses 9. Das eine Ende der Bohrung 27 ist durch ein Verschlußstück 30 geschlossen, das vom Umfang des Kolbengehäuses 9 in das eine Ende der Bohrung 27 geschraubt werden kann. Das gegenüberliegende Ende 31 der Bohrung 27 ist verjüngt ausgebildet und nach außen offen. Die andere Bohrung 28 ist an beiden Enden durch jeweils ein Verschlußstück 32, 33 geschlossen, das vom Umfang des Kolbengehäuses 9 aus in die Bohrung 28 geschraubt werden kann.

Außerdem ist im Boden 26 des Kolbengehäuses 9 eine weitere Bohrung 34 zur Aufnahme des Druckbegrenzungsventils 22 vorgesehen. Auch diese Bohrung 34 liegt in einer Ebene senkrecht zur Achse 29 des Kolbengehäuses 9.

Nahe dem Verschlußstück 30 mündet in die Bohrung 27 eine Querbohrung 35, welche die Bohrung 27 mit dem Druckraum 16 verbindet.

Auch in die Bohrung 28 mündet eine Querbohrung 36, die in Ansicht (Fig. 6) langlochförmig ausgebildet ist und die Bohrung 28 mit dem Druckraum 16 verbindet. Diese Querbohrung 36 liegt nahe benachbart zum Verschlußstück 32.

Nahe dem gegenüberliegenden Verschlußstück 33 mündet in die Bohrung 28 eine Bohrung 37, die in einer senkrecht zur Achse 29 des Kolbengehäuses 9 verlaufenden Ebene liegt und bis zum Umfang des Kolbengehäuses 9 reicht (Fig. 4). Diese Bohrung 37 ist durch ein Verschlußstück 38 geschlossen. In die Bohrung 37 mündet eine Querbohrung 39 (Fig. 4), über welche das Hydraulikmedium in noch zu beschreibender Weise in den Tank 20, in ein Gehäuse oder dergleichen gelangen kann.

Die das Druckbegrenzungsventil 22 aufnehmende Bohrung 34 ist durch eine Ventilkugel 40 gegenüber einer Querbohrung 41 geschlossen, die in den Druckraum 16 mündet (Fig. 4 und 6). Die Ventilkugel 40 steht unter der Kraft einer Druckfeder 42, die sich an einer Einstellschraube 43 abstützt, mit der die Federkraft eingestellt werden kann.

Wie Fig. 6 zeigt, ist am Boden des Druckraums 16 ein etwa V-förmiges Federelement 44 befestigt. Es ist im Bereich seines Steges mit zwei Nieten 45 oder dergleichen am Druckraumboden befestigt. An den freien Enden der beiden Schenkel 46, 47 des Federelementes 44 befindet sich auf der dem Druckraumboden zugewandten Seite jeweils ein Ventilelement 48, 49, mit dem jeweils eine im Druckraumboden mündende Bohrung geschlossen werden kann. Das Federelement 44 mit den Ventilelementen 48, 49 bildet Rückschlagventile 50 (Fig. 1), welche die Druckleitung 17 gegen den Tank 20 verschließen.

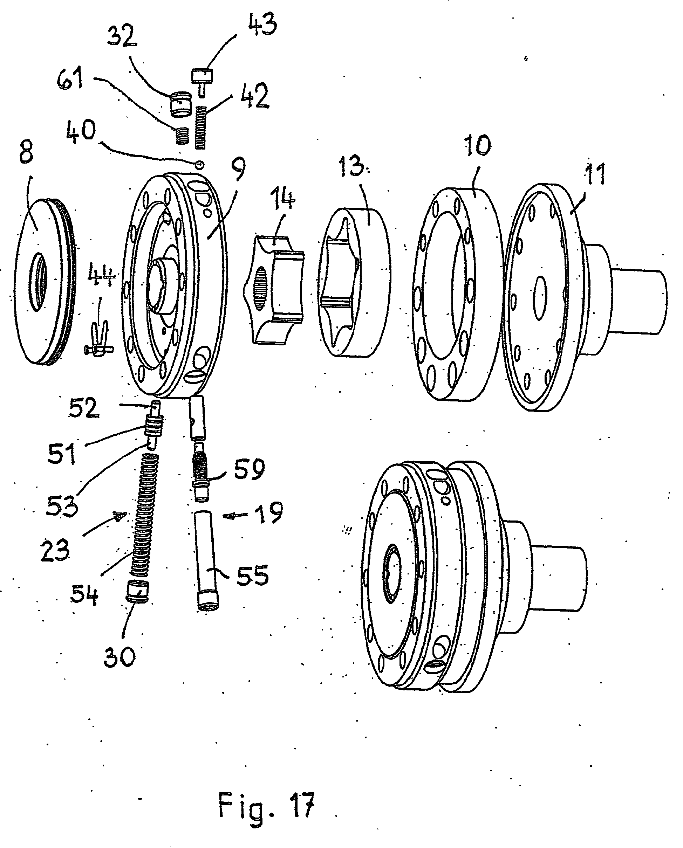

Der Pulsationsdämpfer 23 hat einen Kolben 51, der dichtend an der Wandung der Bohrung 27 anliegt und an dessen beiden Stirnseiten im Durchmesser kleinere zapfenförmige Ansätze 52, 53 axial abstehen (Fig. 4 und 17). Der eine Ansatz 53 dient zur Zentrierung einer Druckfeder 54, durch welche der Kolben 51 in seine in Fig. 4 dargestellte Endlage belastet wird. In dieser Endlage liegt der Kolben 51 mit seinem anderen Ansatz 52 am Verschlußstück 30 an, das vorteilhaft eine Einstellschraube ist, mit der sich die Kraft der Druckfeder 54 stufenlos einstellen läßt. In der Endlage des Kolbens 51 wird die Querbohrung 35 nicht vollständig geschlossen, so daß eine Verbindung zwischen dem Druckraum 16 des Kolbengehäuses 9 und der Bohrung 27 besteht.

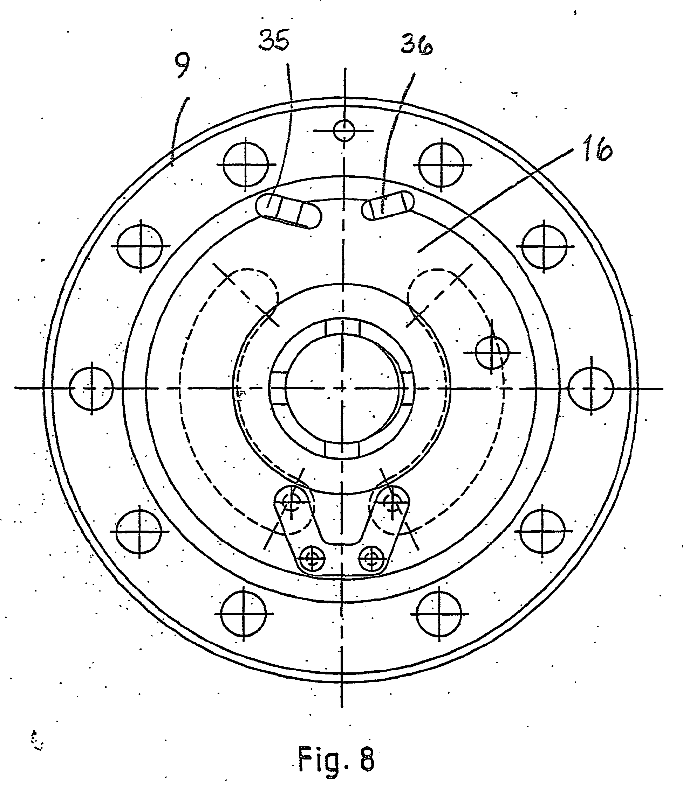

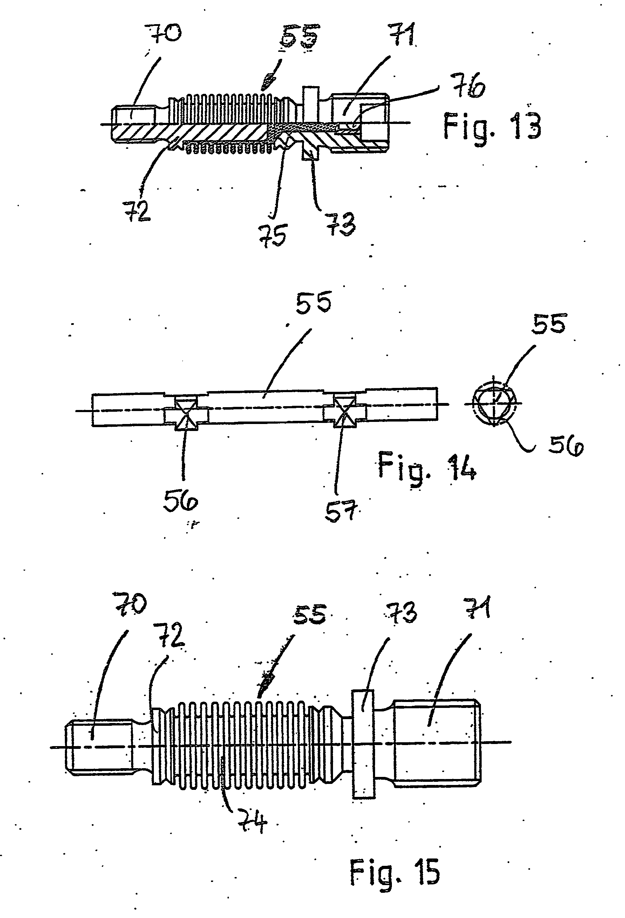

Die Drossel 19 hat ein vorzugsweise aus Kunststoff bestehendes Hubelement 55 (Fig. 4, 7 und 14), das über seine Länge kreisförmigen Querschnitt hat. An zwei mit Abstand voneinander sowie von seinen Enden liegenden Bereichen ist das Hubelement 55 mit im Querschnitt dreieckförmigen Führungen 56, 57 (Fig. 4 und 14) versehen, mit denen das Hubelement 55 an der Wandung der Bohrung 28 geführt wird. Die Ecken der Führungen 56, 57 sind entsprechend der Krümmung der Bohrungswand gekrümmt, so daß das Hubelement 55 einwandfrei in der Bohrung geführt wird. Im Bereich außerhalb dieser Führungen 56, 57 ist der Durchmesser des Hubelementes 55 kleiner als der Durchmesser der Bohrung 28. Da auch die im Querschnitt dreieckförmigen Führungen 56, 57 nur im Eckbereich an der Bohrungswandung anliegen, wird zwischen dem Hubelement 55 und der Bohrungswandung ein Ringkanal 58 (Fig. 7) gebildet, durch den das Hydraulikmedium in noch zu beschreibender Weise über die Bohrungen 37 und 39 zum Tank 20 zurückgeführt werden kann.

Das Hubelement 55 liegt mit seinem Ende am Verschlußstück 33 an, das vorteilhaft als Einstellschraube ausgebildet ist. Dadurch läßt sich die Lage des Hubelementes 55 in der Bohrung 28 feinfühlig einstellen.

Das Hubelement 55 besteht aus einem Kunststoff mit hoher Temperaturbeständigkeit und einem großen Längenausdehnungskoeffizienten. Je nach Temperatur des Hydraulikmediums dehnt sich somit das Hubelement 55 unterschiedlich weit aus.

Mit dem Hubelement 55 wird ein Kolben 59 verschoben (Fig. 7 und 17), der als Hohlkolben ausgebildet ist und am Hubelement 55 anliegt. Das beim Betrieb der Rotorpumpe 15 über die Querbohrung 36 in die Bohrung 28 eintretende Hydraulikmedium gelangt über eine Steuerkerbe 68 in das Innere des Hohlkolbens 59. Die Steuerkerbe 68 wird durch eine an der Stirnseite des Hohlkolbens 59 vorgesehene Vertiefung gebildet, die im Vergleich zur Querbohrung 36 nur einen sehr geringen Durchlaßquerschnitt für das Hydraulikmedium aufweist. Nahe der Anlage am Hubelement 55 ist der Kolben 59 mit einer Querbohrung 60 versehen, durch welche das Hydraulikmedium in den Ringraum 58 strömen kann. Der Kolben 59 liegt, wie die Fig. 4 und 7 zeigen, an der Wandung eines im Querschnitt verengten Abschnittes 62 der Bohrung 28 an. Der Hohlkolben 59 steht unter der Kraft einer Druckfeder 61, durch welche der Hohlkolben 59 in Anlage am Hubelement 55 gehalten wird. Der Hohlkolben 59 erstreckt sich bis in den Bereich der Querbohrung 36, über die das Hydraulikmedium aus dem Druckraum 16 zum Hohlkolben 59 gelangen kann.

In der in den Fig. 4 und 7 dargestellten Lage liegt die Querbohrung 60 vollständig außerhalb des verengten Bohrungsabschnittes, so daß der gesamte Querschnitt der Querbohrung 60 für den Austritt des Hydraulikmediums in den Ringraum 58 zur Verfügung steht.

Beim Betrieb des Differentialgetriebes erwärmt sich das Hydraulikmedium, wodurch auch das Hubelement 55 entsprechend erwärmt wird und sich ausdehnt. Dies hat zur Folge, daß aufgrund der Längenausdehnung des Hubelementes 55 der Hohlkolben 59 gegen die Kraft der Druckfeder 61 in der Bohrung 28 verschoben wird. Dadurch wird der Durchströmquerschnitt der Steuerkerbe 68 entsprechend verringert. Da das Hydraulikmedium aufgrund der höheren Temperatur dünnflüssiger ist, reicht der kleinere Durchströmquerschnitt für das Hydraulikmedium aus. Es tritt über die Querbohrung 60 in den Ringraum 58 aus. Die Drossel 19 stellt somit ein temperaturkompensiertes Ventil zum Ausgleich der Temperaturabhängigkeit der Viskosität des Hydraulikmediums dar. Ist die Betriebstemperatur verhältnismäßig niedrig und dementsprechend das Hydraulikmedium entsprechend wenig viskos, steht der gesamte Querschnitt der Steuerkerbe 68 des Hohlkolbens 59 für den Durchtritt des Hydraulikmediums zur Verfügung. Wenn mit steigender Betriebstemperatur das Hydraulikmedium dünnflüssiger wird, wird aufgrund der beschriebenen Längenausdehnung des Hubelementes 55 der Durchströmquerschnitt der Steuerkerbe 68 verringert. Auf diese Weise ist eine genaue Temperaturkompensation gewährleistet.

Die beim Betrieb der Rotorpumpe 15 auftretenden starken Pulsationen des Druckes werden durch den Pulsationsdämpfer 23 so stark verringert, daß sie die Funktion der Differentialsperre nicht beeinträchtigen können. Der Kolben 51 des Pulsationsdämpfers 23 ist so ausgebildet, daß er in der in Fig. 4 dargestellten Ausgangslage die Querbohrung 35 nicht verschließt, so daß das Hydraulikmedium aus dem Druckraum 16 über diese Querbohrung 35 in die Bohrung 27 gelangen kann. Entsprechend dem Druckstoß wird der Kolben 51 gegen die Kraft der Druckfeder 54 in der Bohrung 27 verschoben, wodurch die von der Rotorpumpe 15 verursachten Druck- und Volumenstromspitzen aufgefangen werden.

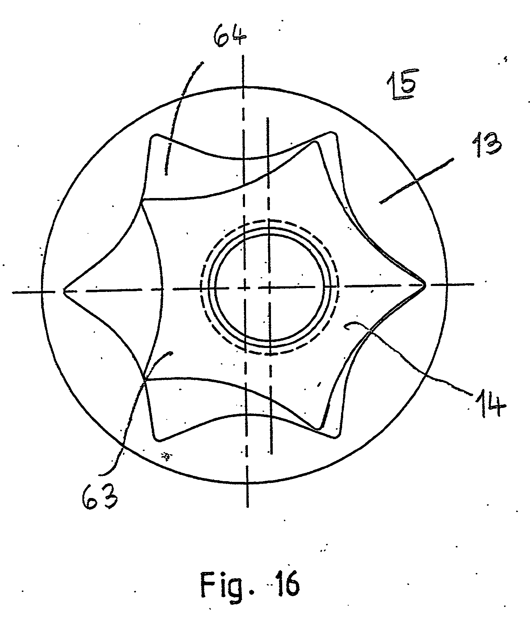

Fig. 16 zeigt schematisch die Rotorpumpe 15 mit dem Außenring 13 und dem Innenring 14. Der Innenring 14 hat beispielhaft fünf Zähne 63, denen entsprechende Vertiefungen 64 im Außenring 13 zugeordnet sind. Aufgrund der geringen Zähnezahl und der niederen Drehzahl treten die beschriebenen starken Pulsationen des Hydraulikdruckes bzw. des übertragbaren Drehmomentes auf, die zu einem stark schwankenden Fördervolumenstrom führen. Durch den Pulsationsdämpfer 23 werden diese Schwankungen jedoch so stark verringert bzw. aufgefangen, daß die Funktionsfähigkeit des Differentialgetriebes bzw. der Differentialsperre nicht beeinträchtigt wird.

Die Rotorpumpe 15 wird über die Differenzdrehzahl zwischen der Radachse 6 (Fig. 12) und einem Differentialgehäuse 65 des Differentialgetriebes 3 angetrieben. Dann fördert die Rotorpumpe 15 das Hydraulikmedium über Bohrungen 66, 67 (Fig. 5) in den Druckraum 16 des Kolbengehäuses 9. Aufgrund dieses Druckaufbaus wird der Kolben 8 axial gegen die Kupplungslamellen 4 (Fig. 3) gedrückt, die durch Reibschluß die Übertragung des Antriebsmomentes auf die (nicht dargestellten) Räder des Fahrzeuges bewirken.

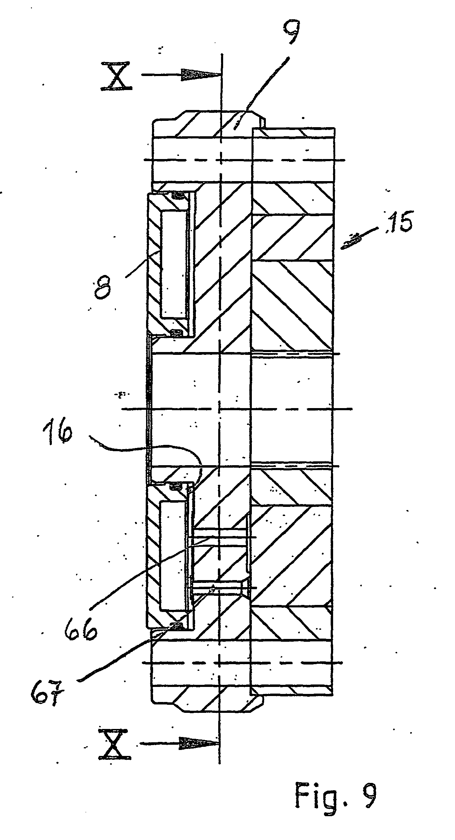

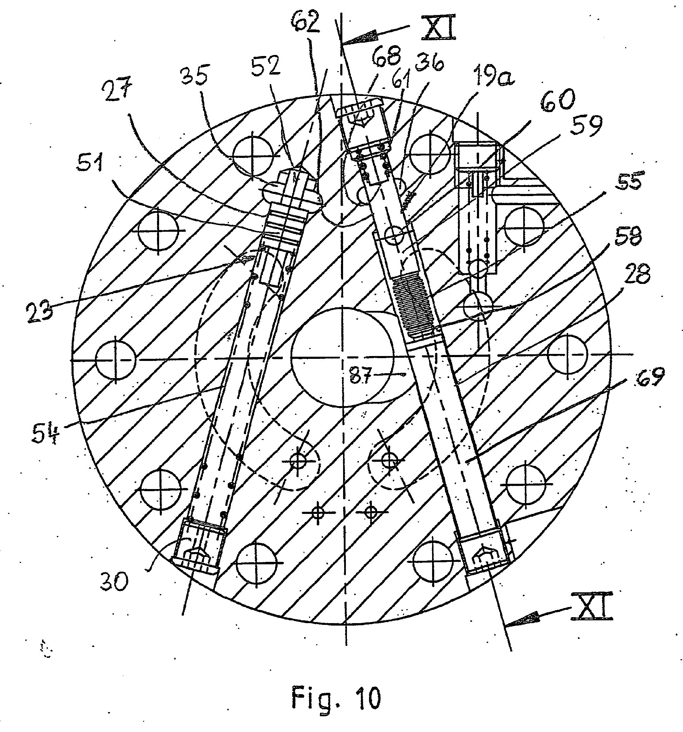

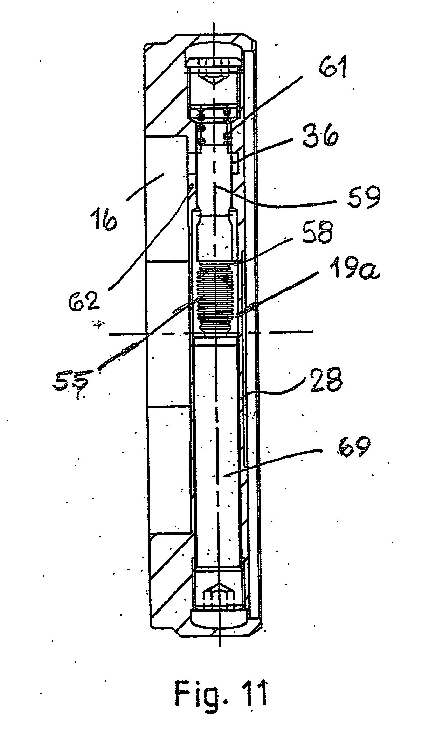

Bei der Ausführungsform gemäß den Fig. 8 bis 11 gelangt das von der Rotorpumpe 15 geförderte Hydraulikmedium ebenfalls über die Bohrungen 66, 67 (Fig. 9) in den ringförmigen Druckraum 16, in dem der Ringkolben 8 entsprechend der vorherigen Ausführungsform abgedichtet axial verschiebbar ist. Bei diesem Ausführungsbeispiel ist der Pulsationsdämpfer 23, der in der Bohrung 27 untergebracht ist, gleich ausgebildet wie beim vorigen Ausführungsbeispiel. Der Pulsationsdämpfer 23 hat den Kolben 51, der abgedichtet in der Bohrung 27 verschiebbar ist und unter der Kraft der Druckfeder 54 steht. Im Vergleich zur vorigen Ausführungsform befindet sich der Kolben 51 an dem vom Verschlußstück 30 abgewandten Ende der Bohrung 27, die als Sacklochbohrung ausgebildet ist. Der Kolben 51 liegt mit seinem einen Ansatz 52 unter der Kraft der Druckfeder 54 am Boden der Bohrung 27 an. Die Bohrung 27 ist über die Querbohrung 35, die im Gegensatz zur vorigen Ausführungsform langlochförmig ausgebildet ist, mit dem Druckraum 16 des Kolbengehäuses 9 verbunden. Die Querbohrung 35 befindet sich an dem vom Verschlußstück 30 abgewandten Ende der Bohrung 27 und wird in der in Fig. 10 dargestellten Grundstellung des Kolbens 51 nicht verschlossen. Wie anhand der vorigen Ausführungsform im einzelnen erläutert worden ist, kann das Hydraulikmedium beim Betrieb der Rotorpumpe 15 aus dem Druckraum 16 über die Querbohrung 35 in die Bohrung 27 gelangen. Entsprechend den auftretenden Pulsationen wird der Kolben 51 gegen die Kraft der Druckfeder 54 verschoben, wodurch die Pulsationen zuverlässig aufgenommen werden, so daß sie die Funktionsfähigkeit des Differentialgetriebes 3 bzw. der Differentialsperre nicht beeinträchtigen.

In der Bohrung 28 ist die Drossel 19a untergebracht, die entsprechend der vorigen Ausführungsform ein temperaturkompensiertes Ventil bildet, um die Temperaturabhängigkeit der Viskosität des Hydraulikmediums auszugleichen. Das über die Querbohrung 36 in die Bohrung 28 eintretende Hydraulikmedium gelangt über die Steuerkerbe 68 (Fig. 10) in das Innere des Hohlkolbens 59. Die Steuerkerbe 68 wird durch die an der Stirnseite des Hohlkolbens 59 vorgesehene Vertiefung gebildet, die im Vergleich zur Querbohrung 36 nur einen sehr geringen Durchlaßquerschnitt für das Hydraulikmedium aufweist. Das Hydraulikmedium kann über die Querbohrung 60 aus dem Hohlkolben in den Ringkanal 58 gelangen. Der Hohlkolben 59 liegt unter der Kraft der Druckfeder 61 am Hubelement 55 an. Die Bohrung 28 hat den im Durchmesser verringerten Abschnitt 62, an dem der Hohlkolben 59 über einen Teil seiner Länge dichtend anliegt. Entsprechend der vorigen Ausführungsform ragt der Hohlkolben 59 in den im Durchmesser erweiterten Bereich der Bohrung 28, so daß der Ringraum 58 für das Hydraulikmedium gebildet wird. Das Hydraulikmedium kann aus dem Ringraum 58 über eine halbmondförmige Kerbe 87 (Fig. 10) im Kolbengehäuse 9 zurück zum Tank 20 strömen.

Das Hubelement 55 ist als Balgelement ausgebildet, das als Steckteil ausgebildet ist und an seinen beiden Enden jeweils ein Steckteil 70, 71 (Fig. 13 und 15) aufweist, mit denen das Balgelement 55 in ein Stützelement 69 und den Hohlkolben 59 gesteckt wird. Die beiden Steckteile 70, 71 schließen über jeweils einen Flansch 72, 73 an den als Balg ausgebildeten Mittelteil 74 an. Das Balgelement 55 ist mit einem abgeschlossenen Medium gefüllt, das über eine Befüllöffnung 76 (Fig. 13) im Steckteil 71 eingebracht werden kann. Der Balg 74 besteht vorteilhaft aus einem gewellten Metallrohr. Es wird von dem im Ringraum 58 strömenden Hydraulikmedium vollständig umspült, so daß eine sehr rasche Temperaturanpassung des Balgelementes 55 an die Temperatur des Hydraulikmediums gewährleistet ist. Entsprechend der Temperatur verändert sich die Länge des Balgelementes 55 und damit auch der Durchströmquerschnitt für das Hydraulikmedium. Je höher die Temperatur des Hydraulikmediums ist, desto mehr längt sich das Balgelement 55. Dies hat zur Folge, daß der Durchströmquerschnitt der Steuerkerbe 68 entsprechend verringert wird. Da das Hydraulikmedium aufgrund der höheren Temperatur dünnflüssiger ist, reicht der kleinere Durchströmquerschnitt für das Hydraulikmedium aus. Auf diese Weise wird auch durch dieses temperaturabhängige Balgelement 55 sichergestellt, daß die Funktion der Differentialsperre an die nichtlineare Viskositätskennlinie des Hydraulikmediums angepaßt wird und daß der schlechte volumetrische Wirkungsgrad der Rotorpumpe 15 bei höheren Temperaturen kompensiert wird. Wie schon beim vorigen Ausführungsbeispiel wird durch die Einstellung eines bestimmten Volumenstromes bei festgelegter konstanter Pumpendrehzahl unabhängig vom volumetrischen Wirkungsgrad eine Kompensation der Streuung der Pumpen 15 im volumetrischen Wirkungsgrad erreicht.

Im übrigen ist die Ausführungsform nach den Fig. 8 bis 11 gleich ausgebildet wie die vorige Ausführungsform.

Fig. 12 zeigt das Differentialgetriebe, das in einem (nicht dargestellten) Gehäuse untergebracht ist, das gleichzeitig auch den Tank für das Hydraulikmedium bildet. Das Differentialgetriebe hat das Differentialgehäuse 65, in dem sich die Differentialräder 77 bis 80 befinden. Auf dem Differentialgehäuse 65 sitzt drehfest ein Kegelrad 81, das in Eingriff mit einem Antriebsritzel 82 einer Antriebswelle 83 ist.

Am Kegelrad 82 ist das Kolbengehäuse 9 mit einem radial nach außen gerichteten Flansch 84 befestigt. Das Kolbengehäuse 9 schließt das offene Ende des Differentialgehäuses 65 ab. Beim dargestellten Ausführungsbeispiel sind das Kolbengehäuse 9, der Distanzring 10 und der Pumpendeckel 11 einstückig miteinander ausgebildet. Die Radachse 6 ist aus dem Kolbengehäuse 9 herausgeführt. In ihm ist der Kolben 8 untergebracht. Die Rotorpumpe 15 liegt auf der vom Lamellenpaket 4 abgewandten Seite des Kolbens 8. Deren Pumpenraum ist durch die innenliegenden Rückschlagventile 50 gegen den Tank geschlossen.

Auf der Radachse 6 sitzt drehfest das als Kegelrad ausgebildete Differentialrad 79, das mit den Kegelrädern 78, 80 kämmt, die auf einer senkrecht zur Radachse 6 liegenden Achse 85 sitzen. Sie ist mit ihren Enden im Getriebegehäuse 65 gelagert. Fluchtend zur Radachse 6 liegt eine Radachse 86, auf der drehfest das als Kegelrad ausgebildete Differentialrad 77 sitzt.

Tritt eine Differenzdrehzahl zwischen der Radachse 6, 86 und dem Differentialgehäuse 65 auf, drehen der Innenring 14 und der Außenring 13 der Rotorpumpe 15 relativ zueinander, wodurch das Hydraulikmedium in der beschriebenen Weise über die Bohrungen 66, 67 (Fig. 9), die durch das Federelement 44 geschlossen sind, in den Druckraum 16 gefördert und unter Druck gesetzt wird. Dadurch wird der Kolben 8 gegen die Kupplungslamellen 4 verschoben, die dadurch zusammengedrückt werden. Aufgrund des hierbei erzeugten Reibschlusses erfolgt die Übertragung des von der Antriebswelle 83 kommenden Antriebsmomentes auf die auf den Radachsen 6, 86 sitzenden Räder des Fahrzeuges.

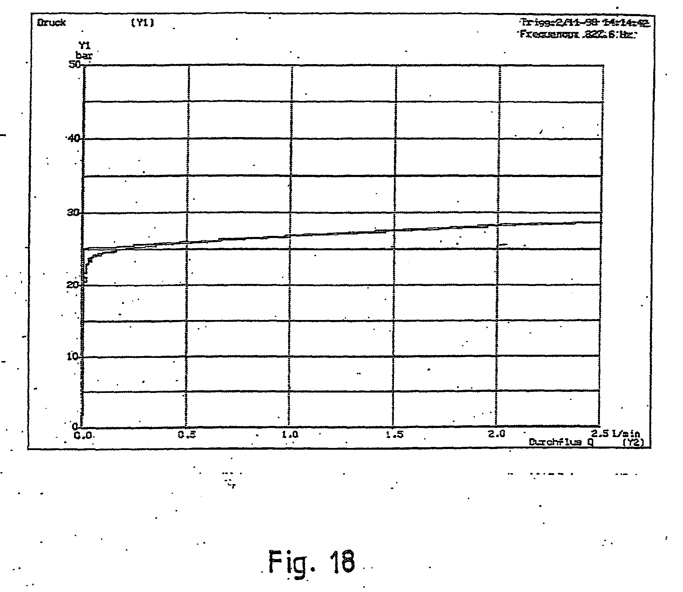

Fig. 18 zeigt die Druck-Durchflußmengen-Kennlinie des Druckbegrenzungsventiles 22. Es ist erkennbar, daß der Druck im Hydrauliksystem durch das Druckbegrenzungsventil auch mit zunehmender Durchflußmenge nur wenig erhöht wird.

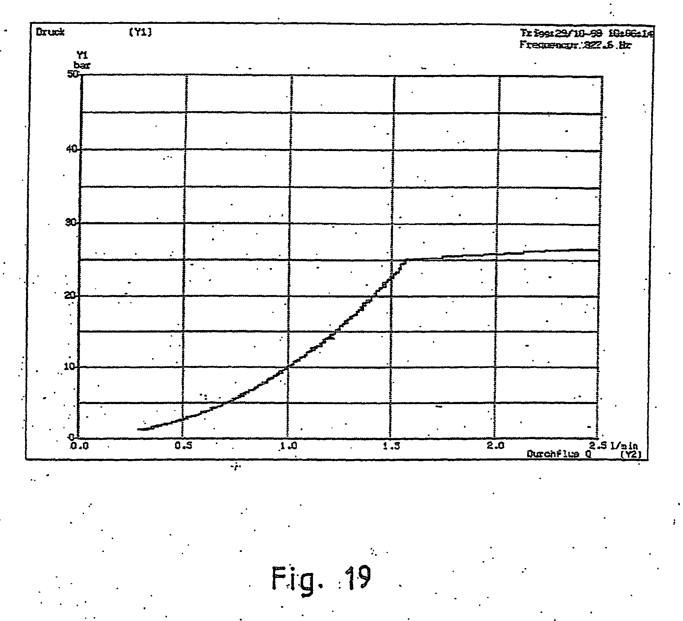

Aus Fig. 19 ergibt sich, daß die Druck-Durchflußmengen-Kennlinie des Gesamtsystems zunächst ansteigt. Der mit zunehmender Durchflußmenge erfolgende Druckanstieg kennzeichnet die Drosselfunktion mittels der Drossel 19, 19a. Mittels des Druckbegrenzungsventiles 22 wird dann sichergestellt, daß der Druck mit zunehmender Durchflußmenge nur noch wenig ansteigt.

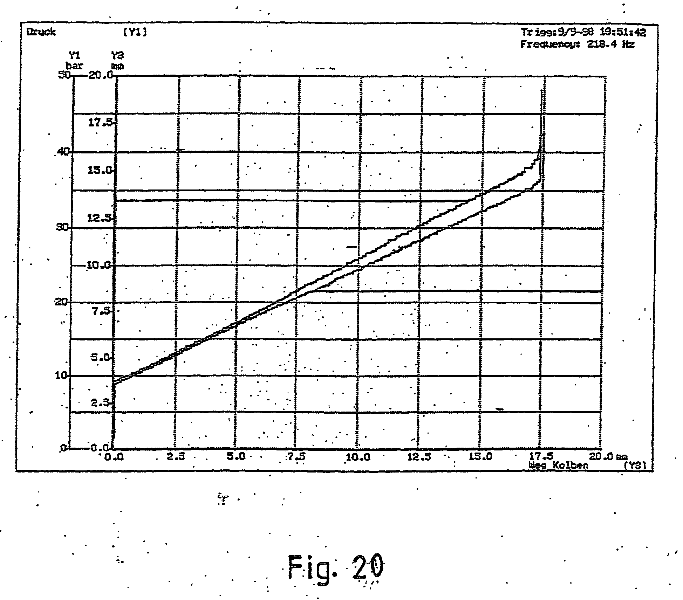

Die Kennlinie des Pulsationsdämpfers 23 zeigt Fig. 20. Der Druck im Hydrauliksystem nimmt mit zunehmendem Verschiebeweg des Kolbens 8 kontinuierlich zu.

Die Pumpe 15 kann abweichend vom dargestellten und beschriebenen Ausführungsbeispiel auch eine Flügelzellenpumpe sein, die auch extern angeordnet sein kann. Die Pumpe muß aber auf die Differenzdrehzahl zwischen der Radachse 6, 86 und dem Differentialgehäuse 65 abgestimmt sein.

Die Drossel 19, 19a ist in den beschriebenen und dargestellten Ausführungsbeispielen vorteilhaft im Kolbengehäuse 9 untergebracht. Sie kann selbstverständlich aber auch außerhalb des Kolbengehäuses angeordnet sein.

Die Drossel 19, 19a und/oder das Druckbegrenzungsventil 22 und/oder der Pulsationsdämpfer 23 können auch im Kolben 8 untergebracht sein.

## Patentansprüche

1. Betätigungseinrichtung (1) für eine Sperre (2), vorzugsweise eine Reibschlusssperre, eines Differentialgetriebes (3), mit einem in einem Druckraum untergebrachten Kolben (8), der auf der Druckseite einer Pumpe (15) angeordnet ist und unter Beaufschlagung durch ein von der Pumpe (15) gefördertes Druckmedium auf die Sperre (2) wirkt, wobei in den Druckraum (16) wenigstens eine Leitung (18, 37) mündet, in der mindestens eine temperaturabhängige Drossel (19, 19a) liegt und die mit einem Tank (20) für das Druckmedium verbunden ist,
**dadurch gekennzeichnet, dass**
die Drossel (19, 19a) ein unter Temperatureinfluss des Druckmediums seine Abmessungen veränderndes Hubelement (55) aufweist.

2. Einrichtung nach Anspruch 1,
**dadurch gekennzeichnet, dass** die Drossel (19, 19a) in einem Kolbengehäuse (9) oder im Kolben (8) untergebracht ist.

3. Einrichtung nach Anspruch 1,
**dadurch gekennzeichnet, dass** das Hubelement (55) seine Länge unter der Temperatur des Druckmediums verändert.

4. Einrichtung nach einem der Ansprüche 1 bis 3,
**dadurch gekennzeichnet, dass** mit zunehmender Temperatur des Druckmediums der Durchströmquerschnitt in der Leitung (18, 37) verkleinert wird.

5. Einrichtung nach einem der Ansprüche 2 bis 4,
**dadurch gekennzeichnet, dass** das Hubelement (55) über einen Teil seiner Länge kleineren Querschnitt hat als die Leitung (18, 37).

6. Einrichtung nach Anspruch 5,
**dadurch gekennzeichnet, dass** das Druckmedium in einem das Hubelement (55) umgebenden Ringraum (58) zum Tank (20) strömt.

7. Einrichtung nach einem der Ansprüche 3 bis 6,
**dadurch gekennzeichnet, dass** das Hubelement (55) einen Balg (74) aufweist.

8. Einrichtung nach einem der Ansprüche 1 bis 7,
**dadurch gekennzeichnet, dass** die Betätigungseinrichtung (1) mindestens einen Pulsationsdämpfer (23) aufweist.

9. Einrichtung nach Anspruch 8,
**dadurch gekennzeichnet, dass** der Pulsationsdämpfer (23) einen gegen Federkraft verschiebbaren Kolben (51) aufweist.

10. Einrichtung nach Anspruch 8 oder 9,
**dadurch gekennzeichnet, dass** der Pulsationsdämpfer (23) in einer Bohrung (27) im Kolbengehäuse (9) oder im Kolben (8) untergebracht ist.

11. Einrichtung nach einem der Ansprüche 1 bis 10,
**dadurch gekennzeichnet, dass** die Betätigungseinrichtung (1) wenigstens ein Druckbegrenzungsventil (22) aufweist.

12. Einrichtung nach Anspruch 11,
**dadurch gekennzeichnet, dass** das Druckbegrenzungsventil (22) im Kolben (8) oder im Kolbengehäuse (9) untergebracht ist.

## Claims

1. An actuating device (1) for a lock (2) preferably a friction lock of a differential gear (3), with a piston (8) situated in a pressure chamber, which piston is arranged on the pressure side of a pump (15) and acts on the lock (2) when subjected to loading by a pressure medium displaced by the pump (15), wherein at least one line (18, 37) opens into the pressure chamber (16), in which at least one temperature-dependent choke (19, 19a) is disposed and which communicates with a tank for the pressure medium, **characterised in that** the choke (19, 19a) is equipped with a stroke element (55) the dimensions of which are changed according to the temperature of the pressure medium.

2. The device according to claim 1,
**characterised in that**
the choke (19, 19a) is disposed in a piston housing (9) or in the piston (8).

3. The device according to claim 1,
**characterised in that**
the length of the stroke element (55) is altered according to the temperature of the pressure medium.

4. The device according to any of claims 1 to 3,
**characterised in that**
the flow cross section in the line (18, 37) is reduced as the temperature of the-pressure medium rises.

5. The device according to any of claims 2 to 4,
**characterised in that**
part of the length of the stroke element (55) has a smaller cross section than that of the line (18, 37).

6. The device according to claim 5,
**characterised in that**
the pressure medium flows to the tank (20) in an annular gap (58) surrounding the stroke element (55).

7. The device according to any of claims 3 to 6,
**characterised in that**
the stroke element (55) includes a bellows (74).

8. The device according to any of claims 1 to 7,
**characterised in that**
the actuating device (1) is equipped with at least one pulse damper (23).

9. The device according to claim 8,
**characterised in that**
the pulse damper (23) is equipped with a piston (51) that is displaceable against spring force.

10. The device according to either of claims 8 or 9,
**characterised in that**
the pulse damper (23) is housed in a bore hole (27) in the piston housing (9) or in the piston (8)

11. The device according to any of claims 1 to 10,
**characterised in that**
the actuating device (1) includes at least one pressure control valve (22).

12. The device according to claim 11,
**characterised in that**
the pressure control valve (22) is housed in the piston (8) or in the piston housing (9).

## Revendications

1. Dispositif d'actionnement (1) pour un dispositif de verrouillage (2), de préférence un dispositif de verrouillage par frottement, d'un différentiel (3), avec un piston (8) logé dans une chambre à pression, lequel est disposé du côté pression d'une pompe (15) et qui agit sur le dispositif de verrouillage (2) en injectant d'un milieu de pression débité par la pompe, au moins une conduite (18, 37) débouchant dans la chambre à pression (16), dans laquelle se trouve au moins un restricteur (19, 19a) dépendant de la température, et qui est relié à un réservoir (20) pour le milieu de pression,
**caractérisé en ce que**,
le restricteur (19, 19a) présente un élément de levage (55) dont les dimensions varient sous l'influence de la température du milieu de pression.

2. Dispositif selon la revendication 1,
**caractérisé en ce que** le restricteur (19,-19a) est logé dans un logement de piston (9) ou dans le piston (8).

3. Dispositif selon la revendication 1,
**caractérisé en ce que** l'élément de levage (55) modifie sa longueur sous la température du milieu de pression.

4. Dispositif selon l'une quelconque des revendications 1 à 3,
**caractérisé en ce que** la section transversale de débit dans la conduite (18, 37) se réduit avec l'augmentation de la température du milieu de pression.

5. Dispositif selon l'une quelconque des revendications 2 à 4,
**caractérisé en ce que** l'élément de levage (55) sur une partie de sa longueur a une section transversale plus petite que celle de la conduite (18, 37).

6. Dispositif selon la revendication 5,
**caractérisé en ce que** le milieu de pression s'écoule dans un espace annulaire (58) entourant l'élément de levage (55) en direction du réservoir (20).

7. Dispositif selon l'une quelconque des revendications 3 à 6,
**caractérisé en ce que** l'élément de levage (55) présente un soufflet (74).

8. Dispositif selon l'une quelconque des revendications 1 à 7,
**caractérisé en ce que** le dispositif d'actionnement (1) présente au moins un amortisseur de pulsations (23).

9. Dispositif selon la revendication 8,
**caractérisé en ce que** l'amortisseur de pulsations (23) présente un piston (51) déplaçable contre une force élastique.

10. Dispositif selon la revendication 8 ou 9,
**caractérisé en ce que** l'amortisseur de pulsations (23) est logé dans un alésage (27) dans le logement de piston (9) ou dans le piston (8).

11. Dispositif selon l'une quelconque des revendications 1 à 10,
**caractérisé en ce que** le dispositif d'actionnement (1) présente au moins une vanne (22) de limitation de pression.

12. Dispositif selon la revendication 11,
**caractérisé en ce que** la vanne (22) de limitation de pression est logée dans le piston (8) ou dans le logement de piston (9).
